# EUROPÄISCHE PATENTSCHRIFT

(11) **EP 1 500 676 B1**
(45) Veröffentlichungstag und Bekanntmachung des Hinweises auf die Patenterteilung: **22.03.2017**
(21) Anmeldenummer: 04015720.8
(22) Anmeldetag: 03.07.2004
(51) Int. Cl.: C08K 5/5313, C08L 77/00, C08L 77/02, C08L 77/06

(54) **FLAMMWIDRIGE POLYAMIDE**
FLAME-RESISTANT POLYAMIDE
POLYAMIDE IGNIFUGÉ

(30) Priorität: 14.07.2003 DE 10331889
(43) Veröffentlichungstag der Anmeldung: 26.01.2005
(73) Patentinhaber: Clariant Produkte (Deutschland) GmbH, 65929 Frankfurt am Main (DE)
(72) Erfinder: Hörold, Sebastian, Dr., 86420 Diedorf (DE); Wanzke, Wolfgang, Dr., 86161 Augsburg (DE); Schacker, Ottmar, Dr., 86368 Gersthofen (DE); Schlosser, Elke, Dl., 86163 Augsburg (DE)

(56) Entgegenhaltungen:
- EP-A- 1 070 754
- WO-A-00/66658
- WO-A-02/28953
- WO-A-97/39053
- US-A- 4 036 811
- US-A- 4 208 321

## Beschreibung

Die vorliegende Erfindung betrifft flammwidrige aromatische oder teilaromatische Copolyamide.

Salze von Phosphinsäuren (Phosphinate) haben sich als wirksame flammhemmende Zusätze für thermoplastische Polymere erwiesen (DE-A-2 252 258 und DE-A-2 447 727). Calcium- und Aluminiumphosphinate sind in Polyestern als besonders effektiv beschrieben worden und beeinträchtigen die Materialeigenschaften der Polymerformmassen weniger als beispielsweise die Alkalimetallsalze (EP-A-0 699 708). In der DE 196 07 635 werden Calcium- und Aluminiumphosphinate als besonders effektive Flammschutzmittel für Polyamide beschrieben. Unter Polyamiden werden Polymere verstanden, die über eine Amidgruppe wiederkehrende Einheiten in der Polymerkette enthalten.

Copolyamide sind solche Produkte, die aus mehr als einem Polyamid-bildenden Monomeren hergestellt werden. Durch die Auswahl der Monomeren und des Mischungsverhältnisses kann man die Eigenschaften der Polyamide in einem sehr weiten Bereich variieren. Gegenüber den aliphatischen Copolyamiden sind bestimmte Copolyamide mit aromatischen Monomeren interessante technische Produkte. Sie zeichnen sich durch eine höhere Glasübergangstemperatur und durch einen höheren Schmelzpunkt der teilkristallinen Bereiche und damit mit einer für die praktische Verwendung ausreichenden Wärmeformbeständigkeit aus. So lassen sich ausgehend von Terephthalsäure und/oder Isophthalsäure und Polyaminen wie Hexamethylendiamin teilkristalline Polyamide mit hoher Wärmeformbeständigkeit herstellen.

Es wurden nun überraschend gefunden, das Aluminium- und Zinkphosphinate in teilaromatischen Polyamiden erheblich wirksamere Flammschutzmittel darstellen als in aliphatischen Polyamiden wie Polyamid 6, Polyamid 66 oder Polyamid 12.

Es wurde weiterhin überraschend gefunden, dass die hohe Wärmeformbeständigkeit der teilaromatischen Polyamide weitgehend erhalten bleibt nach Zusatz der Phosphinate und die Phosphinate/Polyamid-Mischungen bei hohen Temperaturen verarbeitet werden können, ohne das es zu Polymerabbau oder Verfärbungen kommt.

Darüber hinaus wurden synergistische Kombinationen von Phosphinaten mit bestimmten stickstoffhaltigen Verbindungen gefunden, die in einer ganzen Reihe von Polymeren als Flammschutzmittel effektiver wirken, als die Phosphinate allein (WO 97/39053 sowie DE-A-197 34 437 und DE-A-197 37 727).

Unter anderem wurden Melamin und Melaminverbindungen als wirksame Synergisten beschrieben, beispielsweise Melamincyanurat und Melaminphosphat, die selbst auch eine gewisse Flammschutzwirkung in bestimmten Thermoplasten haben, in Kombination mit Phosphinaten aber deutlich wirksamer sind.

Auch höhermolekulare Derivate des Melamins wie die Kondensationsprodukte Melam, Melem und Melon sowie entsprechende Umsetzungsprodukte dieser Verbindungen mit Phosphorsäure wie Dimelaminpyrophosphat und Melaminpolyphosphate sind als Flammschutzmittel beschrieben worden. Die benötigten Zugabemengen in thermoplastischen Kunststoffen sind jedoch relativ hoch, insbesondere bei glasfaserverstärkten Materialien.

Die Erfindung betrifft daher flammwidrige aromatische und teilaromatische Copolyamide, die als Flammschutzmittel mindestens ein Phosphinsäuresalz der Formel (I) und/oder ein Diphosphinsäuresalz der Formel (II) und/oder deren Polymere, 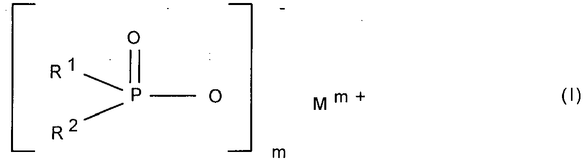 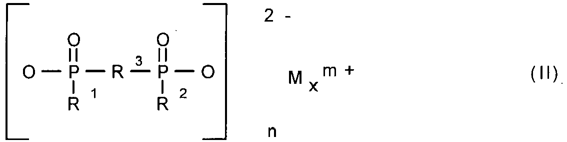 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Aryl-alkylen;
- M: Mg, Ca, Al, Sb, Sn, Ge, Ti, Zn, Fe, Zr, Ce, Bi, Sr, Mn, Li, Na; K und/oder eine protonierte Stickstoffbase;
- m: 1 bis 4;
- n: 1 bis 4;
- x: 1 bis 4
bedeuten, und wobei die Copolyamiden als aromatische Dicarbonsäure Terephthalsäure oder Isophthalsäure und als aromatische Diamine Phenylendiamine oder Xylylendiamine enthalten.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt sind R¹, R² gleich oder verschieden und bedeuten C₁-C₆-Alkyl, linear oder verzweigt und/oder Phenyl.

Bevorzugt sind R¹, R² gleich oder verschieden sind und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen.

Bevorzugt kann das erfindungsgemäße Copolyamid als weitere Komponente B eine Stickstoff-, Phosphor- oder Phosphor-Stickstoff-Verbindung enthalten.

Bevorzugt handelt es sich bei der Komponente B um Melaminphosphat, Dimelaminphosphat, Melaminpyrophosphat, Melaminpolyphosphate, Melampolyphosphate, Melempolyphosphate und/oder Melonpolyphosphate.

Bevorzugt handelt es sich Komponente B um Melaminkondensationsprodukte wie Melam, Melem und/oder Melon

Bevorzugt enthält das erfindungsgemäße Copolyamid als weitere Komponente B mindestens eine Stickstoffverbindung.

Bevorzugt handelt es sich bei den Stickstoffverbindungen um solche der Formeln (III) bis (VIII) oder Gemische davon 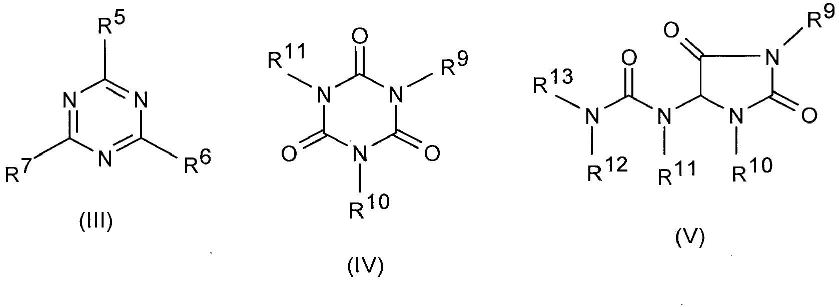 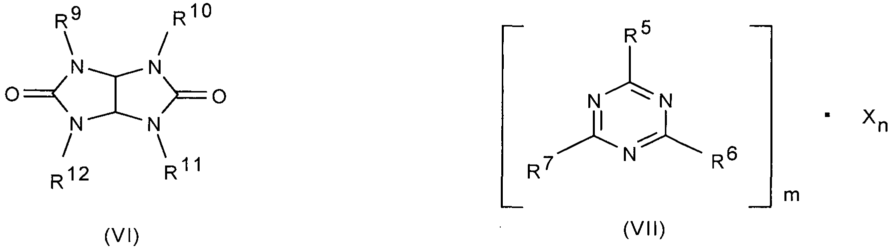 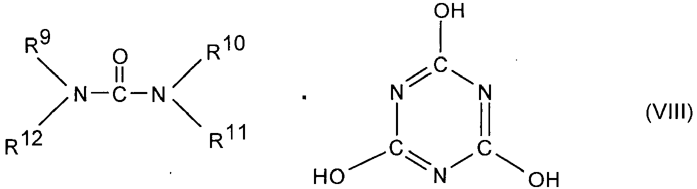 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten.

Bevorzugt enthält das erfindungsgemäße Copolyamid als Komponente B oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide.

Bevorzugt enthält das erfindungsgemäße Copolyamid als Komponente B stickstoffhaltige Phosphate der Formeln (NH₄)_{y}H_{3-y}PO₄ bzw. (NH₄PO₃)_{z} mit y gleich 1 bis 3 und z gleich 1 bis 10.000.

Bevorzugt enthält das erfindungsgemäße Copolyamid als Komponente C eine synthetische anorganische Verbindung und/oder ein mineralisches Produkt.

Bevorzugt handelt es sich bei der Komponente C um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen.

Bevorzugt handelt sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat.

Bevorzugt enthält das erfindungsgemäße Copolyamid 2 bis 30 Gew.-% Komponente A und 0 bis 30 Gew.-% Komponente B.

Bevorzugt enthält das erfindungsgemäße Copolyamid 10 bis 25 Gew.-% Komponente A, 0 bis 20 Gew.-% Komponente B und 0 bis 10 Gew.-% Komponente C.

Bevorzugt enthält das erfindungsgemäße Copolyamid 10 bis 20 Gew.-% Komponente A, 0 bis 10 Gew.-% Komponente B und 0 bis 5 Gew.-% Komponente C.

Erfindungsgemäße aromatische und teilaromatische Copolyamide sind beispielsweise in Becker/Braun Kunststoff Handbuch ¾, Polyamide, herausgegeben von L. Bottenbruch und R. Binsack, Kapitel 6, teilaromatische und aromatische Polyamide, S. 803-845, beschrieben, worauf ausdrücklich Bezug genommen wird.

Erfindungsgemäße aromatische und teilaromatische Copolyamide können auch Blockcopolymere der vorgenannten Polyamide mit Polyolefinen, Olefincopolymeren, Ionomeren, oder chemisch gebundenen oder gepfropften Elastomeren enthalten; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("IM-Polyamidsysteme").

Im folgenden umfasst der Begriff "Phosphinsäuresalz" Salze der Phosphin- und Diphosphinsäuren und deren Polymere.

Die Phosphinsäuresalze, die in wässrigem Medium hergestellt werden, sind im wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise:
Dimethylphosphinsäure, Ethyl-methylphosphinsäure, Diethylphosphinsäure, Methyln-propyl-phosphinsäure, Methan-di(methylphosphinsäure), Benzol-1,4-(dimethylphosphinsäure), Methyl-phenyl-phosphinsäure und Diphenylphosphinsäure.

Die Salze der Phosphinsäuren gemäß der Erfindung können nach bekannten Methoden hergestellt werden, wie sie beispielsweise in der EP-A-0 699 708 näher beschrieben sind. Die Phosphinsäuren werden dabei beispielsweise in wässriger Lösung mit Metallcarbonaten, Metallhydroxiden oder Metalloxiden umgesetzt.

Die Menge des den Polymeren zuzusetzenden Phosphinsäuresalzes kann innerhalb weiter Grenzen variieren. Im allgemeinen verwendet man 1 bis 50 Gew.-%, bezogen auf die Kunststoff-Formmasse. Die optimale Menge hängt von der Natur des Polymeren und der Art der Komponenten B und vom Typ des eingesetzten Phosphinsäuresalzes selbst ab. Bevorzugt sind 3 bis 40 Gew.-%, insbesondere 5 bis 30 Gew.-%, bezogen auf die Kunststoff-Formmasse.

Die vorgenannten Phosphinsäuresalze können für die erfindungsgemäße Flammschutzmittel-Kombination je nach Art des verwendeten Polymeren und der gewünschten Eigenschaften in verschiedener physikalischer Form angewendet werden. So können die Phosphinsäuresalze beispielsweise zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze, wie sie gemäß der Erfindung in der Flammschutzmittel-Kombination eingesetzt werden, sind thermisch stabil, zersetzen die Polymeren weder bei der Verarbeitung noch beeinflussen sie den Herstellprozess der Kunststoff-Formmasse. Die Phosphinsäuresalze sind unter den üblichen Herstellungs- und Verarbeitungsbedingungen für thermoplastische Polymere nicht flüchtig.

Die flammhemmenden Komponenten A sowie gegebenenfalls B und C können in die teilaromatischen Copolyamide eingearbeitet werden, indem etwa alle Bestandteile als Pulver und/oder Granulat in einem Mischer vorgemischt und anschließend in einem Compoundieraggregat (z.B. einem Doppelschneckenextruder) in der Polymerschmelze homogenisiert werden. Die Schmelze wird üblicherweise als Strang abgezogen, gekühlt und granuliert. Die Komponenten A sowie gegebenenfalls B und C können auch separat über eine Dosieranlage direkt in das Compoundieraggregat eingebracht werden.

Es ist ebenso möglich, die flammhemmenden Komponenten A sowie gegebenenfalls B und C einem fertigen Polymergranulat bzw. -pulver beizumischen und die Mischung direkt auf einer Spritzgussmaschine zu Formteilen zu verarbeiten.

Den teilaromatischen Copolyamide können neben der erfindungsgemäßen flammhemmenden Kombination aus A sowie gegebenenfalls B und C auch Füll- und Verstärkungsstoffe wie Glasfasern, Glaskugeln oder Mineralien wie Kreide zugesetzt werden. Zusätzlich können die Polyamide noch andere Zusätze wie Antioxidantien, Lichtschutzmittel, Gleitmittel, Farbmittel, Nukleierungsmittel oder Antistatika enthalten. Beispiele für die verwendbaren Zusätze sind in EP-A-0 584 567 angegeben.

Die erfindungsgemäßen teilaromatischen Copolyamide eignen sich zur Herstellung von Formkörpern, Filmen, Fäden und Fasern, beispielsweise durch Spritzgießen, Extrudieren oder Verpressen.

Der Brandschutz elektrischer und elektronischer Ausrüstungen ist in Vorschriften und Normen zur Produktsicherheit festgelegt. In den USA werden brandschutztechnische Prüf- und Zulassungsverfahren von Underwriters Laboratories (UL) durchgeführt. Die UL Vorschriften werden heute weltweit akzeptiert. Die Brandprüfungen für Kunststoffe wurden entwickelt, um den Widerstand der Materialien gegenüber Entzündung und Flammenausbreitung zu ermitteln.

Je nach Brandschutzanforderungen müssen die Materialien horizontale Brenntests (Klasse UL 94 HB oder die strengeren vertikalen Tests (UL 94 V2, V1 oder V-0) bestehen. Diese Prüfungen simulieren Zündquellen geringer Energie, die in Elektrogeräten auftreten und auf Kunststoffteile elektrischer Baugruppen einwirken können.

### Beispiele

### 1. Eingesetzte Komponenten

Handelsübliche Polymere (Granulate):
Polyamid 6.6:^{®}Durethan A 30 (Fa. Bayer AG, D)
Polyamid 6 ^{®}Durethan B 29 (Fa. Bayer AG, D)

Teilaromatische Polyamide:
^{®}Durethan T 40 (Fa. Bayer AG, D): Polyamid aus Isophthalsäure und 1,6 Diaminohexan
^{®}Ultramid T (Fa. BASF AG, D): Polyamid aus Terephthalsäure, Diaminohexan und Caprolactam
®Amodel (Fa. Solvay, USA): Polyamid aus Terephthalsäure, Isophthalsäure, Adipinsäure und Diaminohexan
®Zytel HTN (Fa. DuPont, USA): Polyamid aus Terephthalsäure, Diaminohexan, 2-Methyldiaminopentan

Flammschutzmittelkomponenten (pulverförmig):
Aluminiumsalz der Diethylphosphinsäure, im folgenden als DEPAL bezeichnet.

### 2. Herstellung, Verarbeitung und Prüfung von flammhemmenden Kunststoff-Formmassen

Die Polymere wurden auf einem Doppelschnecken-Extruder (Typ Leistritz ZSE 25/44) bei Temperaturen von 260 bis 280°C (PA 6.6-GV) bzw. von 230 bis 250°C (PA 6-GV) bzw. von 300-320°C (teilaromatische Copolyamide) verarbeitet. Der homogenisierte Polymerstrang wurde abgezogen, im Wasserbad gekühlt und anschließend granuliert.
Die Flammschutzmittelkomponenten wurden in dem in den Tabellen angegebenen Verhältnis vermischt und über einen Seiteneinzug der Polymerschmelze zugegeben. Die Glasfasern wurden ebenfalls über einen Seiteneinzug zugegeben.

Nach ausreichender Trocknung wurden die Formmassen auf einer Spritzgießmaschine (Typ Arburg 320 C Allrounder) zu Prüfkörpern verarbeitet und anhand des UL 94-Tests (Underwriter Laboratories) und der Glühdrahtprüfung nach IEC 60695-2 auf Flammwidrigkeit geprüft und klassifiziert.

Die Fließfähigkeit der Formmassen wurde durch Ermittlung des Schmelzvolumenindex (MVR) bei 275°C/2,16 kg bestimmt. Ein starker Anstieg des MVR-Wertes deutet auf einen Polymerabbau hin.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Die Tabelle 1 zeigt Vergleichsbeispiele, in denen Depal in Polyamid 66 oder Polyamid 6 eingesetzt wurde.

Die Ergebnisse der Beispiele, in denen die Phosphinate gemäß der Erfindung in teilaromatischen Copolyamiden eingesetzt wurden, sind in der Tabelle 2 aufgelistet. Alle Mengen sind als Gew.-% angegeben und beziehen sich auf die Kunststoff-Formmasse einschließlich der Flammschutzmittel-Kombination und Zusatzstoffen.

Aus den Beispielen geht hervor, dass Depal in teilaromatischen Copolyamiden überraschenderweise deutlich wirksamer ist als in Polyamid 66 oder 6. Erst bei einer Dosierung von 30 % Depal wird in PA 6 und PA 66 eine V-0 Einstufung erreicht, bei 20 % Depal werden zu lange Nachbrennzeiten sowie brennendes Abtropfen beobachtet. In den teilaromatischen Copolyamiden wird dagegen schon bei 20 % Dosierung eine V-0 Einstufung erreicht. Durch den geringeren Gehalt an Flammschutzmittel werden bessere mechanische Werte erhalten. Darüber hinaus können höhere Glasgehalte eingestellt werden. Trotz der hohen Verarbeitungstemperaturen von > 300°C werden weder Verfärbungen noch Polymerabbau beobachtet.
Soweit nicht anders angegeben, handelt es sich bei Mengenangaben immer um Gew.-%.

**Tabelle 1:**

| Vergleichsbeispiele: Depal als Flammschutzmittel in glasfaserverstärktem PA 6.6 und PA 6 | | | |
|---|---|---|---|
| Vergleichsbeispiele | Polyamid 30% GF | DEPAL [%] | Klasse nach UL 94 (0,8 mm) |
| 1 | PA 66 | 0 | n.k.^{*)} |
| 2 | PA 66 | 10 | n.k. |
| 3 | PA 66 | 20 | V-2 |
| 4 | PA 66 | 30 | V-0 |
| 5 | PA 6 | 10 | n.k. |
| 6 | PA 6 | 20 | n.k. |
| 7 | PA 6 | 30 | V-0 |

| | | | |
|---|---|---|---|
| ^{*)} n.k. = nicht klassifizierbar | | | |

**Tabelle 2:**

| Erfindungsgemäße Beispiele: Depal in glasfaserverstärktem teilaromatischen Copolyamiden | | | |
|---|---|---|---|
| Erfindungsbeispiele | Polyamid 30% GF | DEPAL [%] | Klasse nach UL 94 (0,8 mm) |
| 1 | ®Zytel HTN | 0 | n.k.') |
| 2 | ®Zytel HTN | 10 | n.k. |
| 3 | ®Zytel HTN | 20 | V-0 |
| 4 | ®Durethan T 40 | 0 | n.k. |
| 5 | ®Durethan T 40 | 10 | n.k. |
| 6 | ®Durethan T 40 | 20 | V-0 |
| 7 | ®Amodel | 10 | n.k. |
| 8 | ®Amodel | 20 | V-0 |

## Patentansprüche

1. Flammwidrige aromatische und teilaromatische Copolyamide, **dadurch gekennzeichnet, dass** sie als Flammschutzmittel (Komponente A) mindestens ein Phosphinsäuresalz der Formel (I) und/oder ein Diphosphinsäuresalz der Formel (II) und/oder deren Polymere 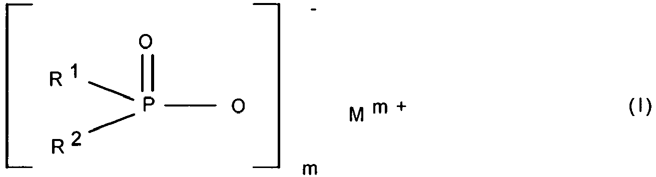 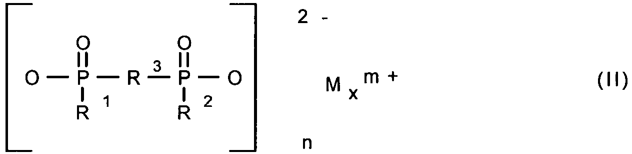 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Aryl-alkylen;
M Mg, Ca, Al, Sb, Sn, Ge, Ti, Zn, Fe, Zr, Ce, Bi, Sr, Mn, Li, Na; K und/oder eine protonierte Stickstoffbase;
m 1 bis 4;
n 1 bis 4;
x 1 bis 4
bedeuten, und wobei die Copolyamide als aromatische Dicarbonsäure Terephthalsäure oder Isophthalsäure und als aromatische Diamine Phenylendiamine oder Xylylendiamine enthalten.

2. Flammwidrige aromatische und teilaromatische Copolyamide, nach Anspruch 1, **dadurch gekennzeichnet, dass** R¹, R² gleich oder verschieden sind und C₁-C₆-Alkyl, linear oder verzweigt und/oder Phenyl bedeuten.

3. Flammwidrige aromatische und teilaromatische Copolyamide nach Anspruch 1 oder 2, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

4. Flammwidrige aromatische und teilaromatische Copolyamide nach einem oder mehreren der Ansprüche 1 bis 3, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenyl-propylen oder Phenyl-butylen bedeutet.

5. Flammwidrige aromatische und teilaromatische Copolyamide nach einem oder mehreren der Ansprüche 1 bis 4, **dadurch gekennzeichnet, dass** sie als weitere Komponente B eine Stickstoff-, Phosphor- oder Phosphorstickstoffverbindung enthält.

6. Flammwidrige aromatische und teilaromatische Copolyamide nach einem oder mehreren der Ansprüche 1 bis 5, **dadurch gekennzeichnet, dass** es sich bei der Komponente B um Melaminphosphat, Dimelaminphosphat, Melaminpyrophosphat, Melaminpolyphosphate, Melampolyphosphate, Melempolyphosphate und/oder Melonpolyphosphate handelt.

7. Flammwidrige aromatische und teilaromatische Copolyamide nach einem oder mehreren der Ansprüche 1 bis 6, **dadurch gekennzeichnet, dass** es sich bei der Komponente B um Melaminkondensationsprodukte wie Melam, Melem und/oder Melon handelt.

8. Flammwidrige aromatische und teilaromatische Copolyamide nach einem oder mehreren der Ansprüche 1 bis 7, **dadurch gekennzeichnet, dass** es sich bei der Komponente B um Stickstoffverbindungen der Formeln (III) bis (VIII) oder Gemische davon handelt, 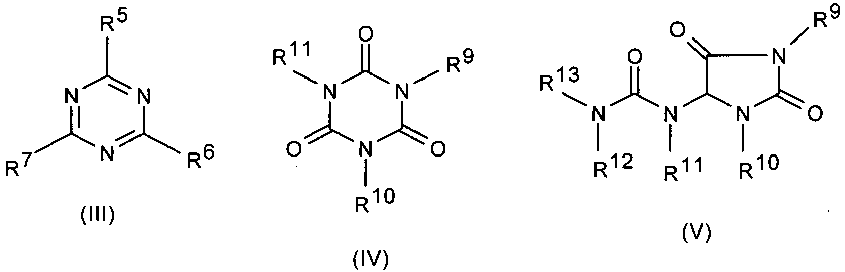 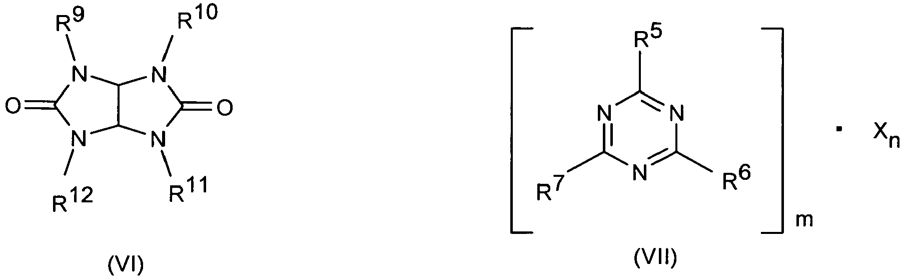 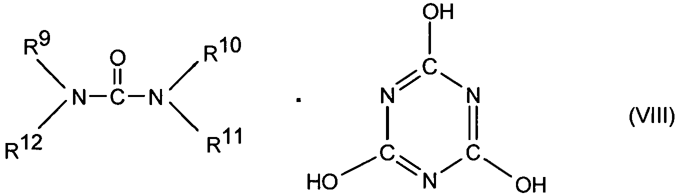 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können, bedeuten.

9. Flammwidrige aromatische und teilaromatische Copolyamide nach einem oder mehreren der Ansprüche 1 bis 8, **dadurch gekennzeichnet, dass** es sich bei der Komponente B um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid, Guanidin und/oder Carbodiimide handelt.

10. Flammwidrige aromatische und teilaromatische Copolyamide nach einem oder mehreren der Ansprüche 1 bis 9, **dadurch gekennzeichnet, dass** es sich bei der Komponente B um stickstoffhaltige Phosphate der Formeln (NH₄)_{y}H_{3-y}PO₄ bzw. (NH₄PO₃)_{z}, mit y gleich 1 bis 3 und z gleich 1 bis 10.000, handelt.

11. Flammwidrige aromatische und teilaromatische Copolyamide nach einem oder mehreren der Ansprüche 1 bis 10, **dadurch gekennzeichnet, dass** sie als Komponente C eine synthetische anorganische Verbindung und/oder ein mineralisches Produkt enthält.

12. Flammwidrige aromatische und teilaromatische Copolyamide nach einem oder mehreren der Ansprüche 1 bis 11, **dadurch gekennzeichnet, dass** es sich bei der Komponente C um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen handelt.

13. Flammwidrige aromatische und teilaromatische Copolyamide nach einem oder mehreren der Ansprüche 1 bis 12,, **dadurch gekennzeichnet, dass** sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, - stearat, -phosphat, -borat oder -sulfide; bei den Aluminiumverbindungen um Aluminiumhydroxid oder -phosphat handelt.

14. Flammwidrige aromatische und teilaromatische Copolyamide nach einem oder mehreren der Ansprüche 1 bis 13, **dadurch gekennzeichnet, dass** sie 2 bis 30 Gew.-% Komponente A und 0 bis 30 Gew.-% Komponente B enthalten.

15. Flammwidrige aromatische und teilaromatische Copolyamide nach einem oder mehreren der Ansprüche 1 bis 14, **dadurch gekennzeichnet, dass** sie 10 bis 25 Gew.-% Komponente A, 0 bis 20 Gew.-% Komponente B und 0 bis 10 Gew.-% Komponente C enthalten.

16. Flammwidrige aromatische und teilaromatische Copolyamide nach einem oder mehreren der Ansprüche 1 bis 15, **dadurch gekennzeichnet, dass** sie 10 bis 20 Gew.-% Komponente A, 0 bis 10 Gew.-% Komponente B und 0 bis 5 Gew.-% Komponente C enthalten.

## Claims

1. A flame-retardant aromatic or semiaromatic copolyamide which comprises, as flame retardant (component A), at least one phosphinic salt of the formula (I), and/or one diphosphinic salt of the formula (II), and/or polymers of these, 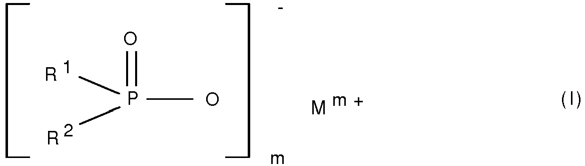 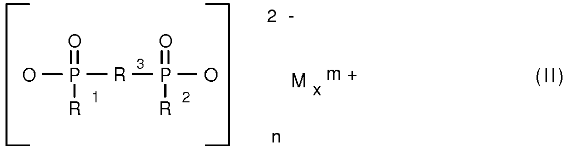 where
R¹, R² are identical or different and are C₁-C₆-alkyl, linear or branched, and/or aryl;
R³ is C₁-C₁₀-alkylene, linear or branched, C₆-C₁₀-arylene, -alkylarylene, or -arylalkylene;
M is Mg, Ca, Al, Sb, Sn, Ge, Ti, Zn, Fe, Zr, Ce, Bi, Sr, Mn, Li, Na; K and/or a protonated nitrogen base;
m is from 1 to 4;
n is from 1 to 4;
x is from 1 to 4,
and where the copolyamides comprise, as aromatic dicarboxylic acid, terephthalic acid or isophthalic acid, and comprise, as aromatic diamines, phenylenediamines or xylylenediamines.

2. The flame-retardant aromatic or semiaromatic copolyamide as claimed in claim 1, wherein R¹ and R² are identical or different, and are C₁-C₆-alkyl, linear or branched, and/or phenyl.

3. The flame-retardant aromatic or semiaromatic copolyamide as claimed in claim 1 or 2, wherein R¹ and R² are identical or different and are methyl, ethyl, n-propyl, isopropyl, n-butyl, tert-butyl, n-pentyl, and/or phenyl.

4. The flame-retardant aromatic or semiaromatic copolyamide as claimed in one or more of claims 1 to 3, wherein R³ is methylene, ethylene, n-propylene, isopropylene, n-butylene, tert-butylene, n-pentylene, n-octylene or n-dodecylene; phenylene or naphthylene; methylphenylene, ethylphenylene, tert-butylphenylene, methylnaphthylene, ethylnaphthylene or tert-butylnaphthylene; phenylmethylene, phenylethylene, phenylpropylene, or phenylbutylene.

5. The flame-retardant aromatic or semiaromatic copolyamide as claimed in one or more of claims 1 to 4, which comprises, as further component B, a nitrogen compound, phosphorus compound, or phosphorus-nitrogen compound.

6. The flame-retardant aromatic or semiaromatic copolyamide as claimed in one or more of claims 1 to 5, wherein component B comprises melamine phosphate, dimelamine phosphate, melamine pyrophosphate, melamine polyphosphates, melam polyphosphates, melem polyphosphates, and/or melon polyphosphates.

7. The flame-retardant aromatic or semiaromatic copolyamide as claimed in one or more of claims 1 to 6, wherein component B comprises melamine condensates, such as melam, melem, and/or melon.

8. The flame-retardant aromatic or semiaromatic copolyamide as claimed in one or more of claims 1 to 7, wherein component B comprises nitrogen compounds of the formulae (III) to (VIII), or a mixture of these, 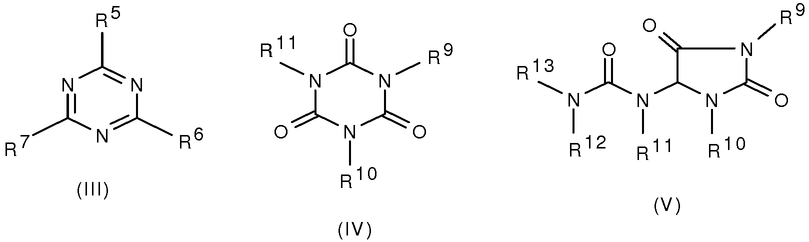 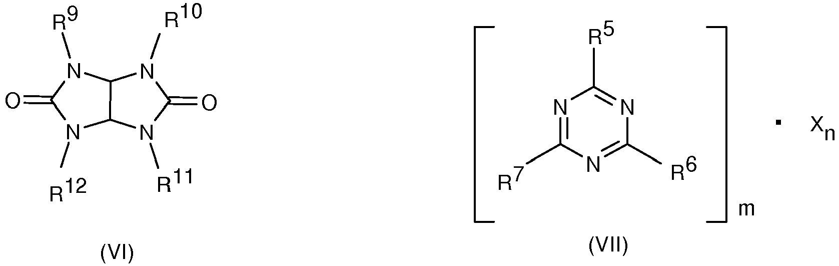 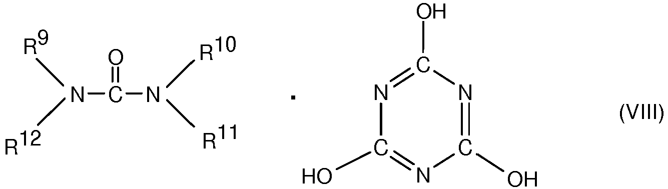 where
R⁵ to R⁷ are hydrogen, C₁-C₈-alkyl, C₅-C₁₆-cycloalkyl or -alkylcycloalkyl, optionally substituted with a hydroxy or a C₁-C₄-hydroxyalkyl function, C₂-C₈-alkenyl, C₁-C₈-alkoxy, -acyl, -acyloxy, C₆-C₁₂-aryl or -arylalkyl, -OR⁸, or -N(R⁸)R⁹, or else a system of N-alicyclic or N-aromatic nature,
R⁸ is hydrogen, C₁-C₈-alkyl, C₅-C₁₆-cycloalkyl or -alkylcycloalkyl, optionally substituted with a hydroxy or a C₁-C₄-hydroxyalkyl function, C₂-C₈-alkenyl, C₁-C₈-alkoxy, -acyl, -acyloxy, or C₆-C₁₂-aryl or -arylalkyl,
R⁹ to R¹³ are the same as the groups for R⁸, or else -O-R⁸,
m and n, independently of one another, are 1, 2, 3 or 4,
X is acids which can form adducts with triazine compounds (III).

9. The flame-retardant aromatic or semiaromatic copolyamide as claimed in one or more of claims 1 to 8, wherein component B comprises oligomeric esters of tris(hydroxyethyl) isocyanurate with aromatic polycarboxylic acids, or comprises benzoguanamine, tris(hydroxyethyl) isocyanurate, allantoin, glycoluril, melamine, melamine cyanurate, dicyandiamide, guanidine, and/or carbodiimides.

10. The flame-retardant aromatic or semiaromatic copolyamide as claimed in one or more of claims 1 to 9, wherein component B comprises nitrogen-containing phosphates of the formulae (NH₄)_{y}H_{3-y}PO₄ or (NH₄PO₃)_{z}, where y is from 1 to 3 and z is from 1 to 10 000.

11. The flame-retardant aromatic or semiaromatic copolyamide as claimed in one or more of claims 1 to 10, which comprises, as component C, a synthetic inorganic compound, and/or a mineral product.

12. The flame-retardant aromatic or semiaromatic copolyamide as claimed in one or more of claims 1 to 11, wherein component C comprises an oxygen compound of silicon, magnesium compounds, metal carbonates of metals of the second main group of the Periodic Table, red phosphorus, zinc compounds, or aluminum compounds.

13. The flame-retardant aromatic or semiaromatic copolyamide as claimed in one or more of claims 1 to 12, wherein the oxygen compounds of silicon comprise salts and esters of orthosilicic acid and condensates thereof, silicates, zeolites, and silicas, glass powder, glass-ceramic powder, or ceramic powder; the magnesium compounds comprise magnesium hydroxide, hydrotalcites, magnesium carbonates, or magnesium calcium carbonates; the zinc compounds comprise zinc oxide, zinc stannate, zinc hydroxystannate, zinc stearate, zinc phosphate, zinc borate, or zinc sulfides; the aluminum compounds comprise aluminum hydroxide or aluminum phosphate.

14. The flame-retardant aromatic or semiaromatic copolyamide as claimed in one or more of claims 1 to 13, which comprises from 2 to 30% by weight of component A and from 0 to 30% by weight of component B.

15. The flame-retardant aromatic or semiaromatic copolyamide as claimed in one or more of claims 1 to 14, which comprises from 10 to 25% by weight of component A, from 0 to 20% by weight of component B, and from 0 to 10% by weight of component C.

16. The flame-retardant aromatic or semiaromatic copolyamide as claimed in one or more of claims 1 to 15, which comprises from 10 to 20% by weight of component A, from 0 to 10% by weight of component B, and from 0 to 5% by weight of component C.

## Revendications

1. Copolyamides aromatiques et partiellement aromatiques, ignifugés, **caractérisés en ce qu'**ils contiennent comme agent retardateur de flammes (composant A) au moins un sel de l'acide phosphinique de formule (I) et/ou un sel de l'acide diphosphinique de formule (II) et/ou de leurs polymères, 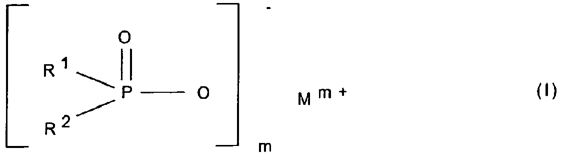 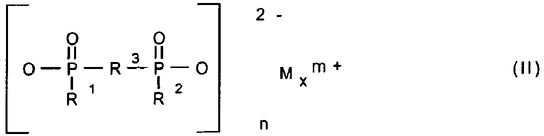 dans lesquelles
R¹, R² sont identiques ou différents et signifient C₁-C₆-alkyle, linéaire ou ramifié et/ou aryle ;
R³ signifie C₁-C₁₀-alkylène, linéaire ou ramifié, C₆-C₁₀-arylène, C₆-C₁₀-alkylarylène ou C₆-C₁₀-arylalkylène ;
M signifie Mg, Ca, Al, Sb, Sn, Ge, Ti, Zn, Fe, Zr, Ce, Bi, Sr, Mn, Li, Na, K et/ou une base azotée protonée ;
m vaut 1 à 4 ;
n vaut 1 à 4 ;
x vaut 1 à 4,
et les copolyamides contenant, comme acide dicarboxylique aromatique, de l'acide téréphtalique ou de l'acide isophtalique et, comme diamines aromatiques, des phénylènediamines ou des xylylènediamines.

2. Copolyamides aromatiques et partiellement aromatiques, ignifugés, selon la revendication 1, **caractérisés en ce que** R¹, R² sont identiques ou différents et signifient C₁-C₆-alkyle, linéaire ou ramifié et/ou phényle.

3. Copolyamides aromatiques et partiellement aromatiques, ignifugés, selon la revendication 1 ou 2, **caractérisés en ce que** R¹, R² sont identiques ou différents et signifient méthyle, éthyle, n-propyle, iso-propyle, n-butyle, tert-butyle, n-pentyle et/ou phényle.

4. Copolyamides aromatiques et partiellement aromatiques, ignifugés, selon l'une ou plusieurs des revendications 1 à 3, **caractérisés en ce que** R³ signifie méthylène, éthylène, n-propylène, isopropylène, n-butylène, tert-butylène, n-pentylène, n-octylène ou n-dodécylène ; phénylène ou naphtylène ; méthylphénylène, éthylphénylène, tert-butylphénylène, méthylnaphtylène, éthylnaphtylène ou tert-butylnaphtylène ; phénylméthylène, phényléthylène, phénylpropylène ou phénylbutylène.

5. Copolyamides aromatiques et partiellement aromatiques, ignifugés, selon l'une ou plusieurs des revendications 1 à 4, **caractérisés en ce qu'**ils contiennent, comme autre composant B, un composé azoté, phosphoré ou phosphoré-azoté.

6. Copolyamides aromatiques et partiellement aromatiques, ignifugés, selon l'une ou plusieurs des revendications 1 à 5, **caractérisés en ce qu'**il s'agit, pour le composant B, de mélamine-phosphate, de dimélamine-phosphate, de mélamine-pyrophosphate, de mélamine-polyphosphates, de mélam-polyphosphates, de mélem-polyphosphates et/ou de mélon-polyphosphates.

7. Copolyamides aromatiques et partiellement aromatiques, ignifugés, selon l'une ou plusieurs des revendications 1 à 6, **caractérisés en ce qu'**il s'agit, pour le composant B, de produits de condensation de la mélamine, tels que le mélam, le mélem et/ou le mélon.

8. Copolyamides aromatiques et partiellement aromatiques, ignifugés, selon l'une ou plusieurs des revendications 1 à 7, **caractérisés en ce qu'**il s'agit, pour le composant B, de composés azotés des formules (III) à (VIII) ou de mélanges de ceux-ci 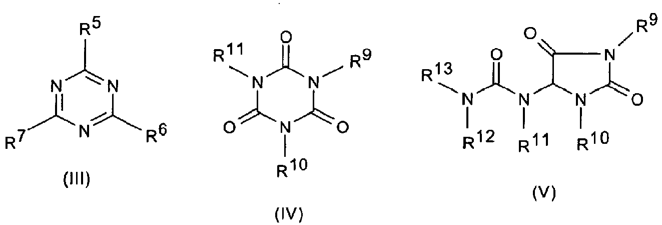 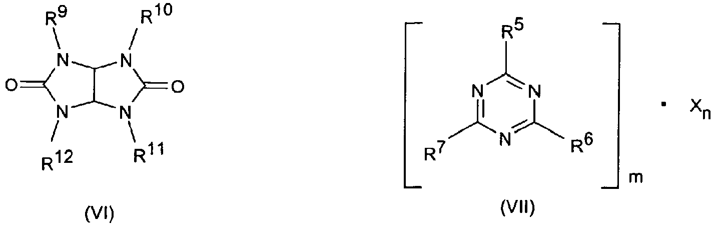 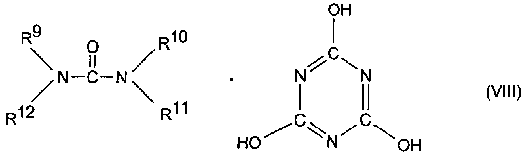 dans lesquelles
R⁵ à R⁷ signifient hydrogène ; C₁-C₈-alkyle, C₅-C₁₆-cycloalkyle ou C₅-C₁₆-alkylcycloalkyle, le cas échéant substitués par une fonction hydroxy ou une fonction C₁-C₄-hydroxyalkyle ; C₂-C₈-alcényle ; C₁-C₈-alcoxy, C₁-C₈-acyle, C₁-C₈-acyloxy, C₆-C₁₂-aryle ou C₆-C₁₂-arylalkyle, -OR⁸ et -N(R⁸)R⁹, ainsi que les radicaux N-alicycliques ou N-aromatiques,
R⁸ signifie hydrogène ; C₁-C₈-alkyle, C₅-C₁₆-cycloalkyle ou C₅-C₁₆-alkylcycloalkyle, le cas échéant substitués par une fonction hydroxy ou une fonction C₁-C₄-hydroxyalkyle ; C₂-C₈-alcényle ; C₁-C₈-alcoxy, C₁-C₈-acyle, C₁-C₈-acyloxy ou C₆-C₁₂-aryle ou C₆-C₁₂-arylalkyle,
R⁹ à R¹³ sont les mêmes groupes que R⁸ ainsi que -O-R⁸,
m et n signifient, indépendamment l'un de l'autre, 1, 2, 3 ou 4,
X signifie des acides qui peuvent former des produits d'addition avec des composés triaziniques (III).

9. Copolyamides aromatiques et partiellement aromatiques, ignifugés, selon l'une ou plusieurs des revendications 1 à 8, **caractérisés en ce qu'**il s'agit, pour le composant B, d'esters oligomères de l'isocyanurate de tris(hydroxyéthyle) avec des acides polycarboxyliques aromatiques, de benzoguanamine, d'isocyanurate de tris(hydroxyéthyle), d'allantoïne, de glycolurile, de mélamine, de cyanurate de mélamine, de dicyanodiamide, de guanidine et/ou de carbodiimides.

10. Copolyamides aromatiques et partiellement aromatiques, ignifugés, selon l'une ou plusieurs des revendications 1 à 9, **caractérisés en ce qu'**il s'agit, pour le composant B, de phosphates contenant de l'azote des formules (NH₄)_{y}H_{3-y}PO₄ ou, selon le cas, (NH₄PO₃)_{z}, y valant 1 à 3 et z valant 1 à 10.000.

11. Copolyamides aromatiques et partiellement aromatiques, ignifugés, selon l'une ou plusieurs des revendications 1 à 10, **caractérisés en ce qu'**ils contiennent, comme composant C, un composé inorganique synthétique et/ou un produit minéral.

12. Copolyamides aromatiques et partiellement aromatiques, ignifugés, selon l'une ou plusieurs des revendications 1 à 11, **caractérisés en ce qu'**il s'agit, pour le composant C, d'un composé oxygéné du silicium, de composés du magnésium, de carbonates métalliques de métaux du deuxième groupe principal du système périodique, de phosphore rouge, de composés du zinc ou de l'aluminium.

13. Copolyamides aromatiques et partiellement aromatiques, ignifugés, selon l'une ou plusieurs des revendications 1 à 12, **caractérisés en ce qu'**il s'agit, pour les composés oxygénés du silicium, de sels et d'esters de l'acide orthosilicique et de leurs produits de condensation, de silicates, de zéolithes et de silices, de poudre de verre, de verre-céramique ou de céramique ; pour les composés de magnésium, d'hydroxyde de magnésium, d'hydrotalcites, de carbonates de magnésium ou de carbonates de magnésium-calcium ; pour les composés du zinc, d'oxyde, de stannate, d'hydroxystannate, de stéarate, de phosphate, de borate ou de sulfures de zinc ; pour les composés de l'aluminium, d'hydroxyde ou de phosphate d'aluminium.

14. Copolyamides aromatiques et partiellement aromatiques, ignifugés, selon l'une ou plusieurs des revendications 1 à 13, **caractérisés en ce qu'**ils contiennent 2 à 30% en poids de composant A et 0 à 30% en poids de composant B.

15. Copolyamides aromatiques et partiellement aromatiques, ignifugés, selon l'une ou plusieurs des revendications 1 à 14, **caractérisés en ce qu'**ils contiennent 10 à 25% en poids de composant A, 0 à 20% en poids de composant B et 0 à 10% en poids de composant C.

16. Copolyamides aromatiques et partiellement aromatiques, ignifugés, selon l'une ou plusieurs des revendications 1 à 15, **caractérisés en ce qu'**ils contiennent 10 à 20% en poids de composant A, 0 à 10% en poids de composant B et 0 à 5% en poids de composant C.
